# EUROPÄISCHE PATENTSCHRIFT

(11) **EP 1 934 306 B1**
(45) Veröffentlichungstag und Bekanntmachung des Hinweises auf die Patenterteilung: **26.09.2018**
(21) Anmeldenummer: 06776497.7
(22) Anmeldetag: 29.07.2006
(51) Int. Cl.: C10C 5/00, C10B 53/02, C10K 1/04, C10J 3/66

(54) **VERFAHREN ZUR HERSTELLUNG UND VORBEREITUNG VON SCHNELLPYROLYSEPRODUKTEN AUS BIOMASSE FÜR EINE FLUGSTROM DRUCKVERGASUNG**
PROCESS FOR PRODUCTION AND PREPARATION OF RAPID PYROLYSIS PRODUCTS FROM BIOMASS FOR PRESSURIZED ENTRAINED-FLOW GASIFICATION
PROCEDE DE FABRICATION ET DE PREPARATION DE PRODUITS DE PYROLYSE RAPIDE A PARTIR DE BIOMASSE POUR UNE GAZEIFICATION SOUS PRESSION A LIT ENTRAINE

(30) Priorität: 15.10.2005 DE 102005049375
(43) Veröffentlichungstag der Anmeldung: 25.06.2008
(73) Patentinhaber: Karlsruher Institut für Technologie, 76131 Karlsruhe (DE)
(72) Erfinder: DINJUS, Eckhard, 76774 Leimersheim (DE); HENRICH, Edmund, 76706 Dettenheim (DE); RAFFELT, Klaus, 76131 Karlsruhe (DE); WEIRICH, Friedhelm, 76689 Neuthard (DE)
(74) Vertreter: Gärtner, Stephan
(86) Internationale Anmeldenummer: PCT/EP2006/007530
(87) Internationale Veröffentlichungsnummer: WO 2007/045291

(56) Entgegenhaltungen:
- EP-A- 1 520 900
- WO-A-00/68338
- WO-A-03/033624
- GB-A- 2 125 429
- HENRICH E ET AL: "FLUGSTROMVERGASUNG VON FLUESSIGEN PYROLYSEPRODUKTEN BEI HOHEM DRUCK: EIN NEUES KONZEPT ZUR BIOMASSEVERGASUNG" DGMK TAGUNGSBERICHT, HAMBURG, DE, Bd. 22, Nr. BIS 24, April 2002 (2002-04), Seiten 95-102, XP001126938 ISSN: 1433-9013

## Beschreibung

Die Erfindung betrifft ein Verfahren zur Herstellung und Vorbereitung von Schnellpyrolyseprodukten aus Biomasse für eine Flugstrom Druckvergasung gemäß des ersten Patentanspruchs. Das Verfahren ist wesentlicher Bestandteil einer Verfahrenskette zur Erzeugung von Synthesegasen aus Biomasse wie Lignocellulose, d.h. cellulose- und ligninhaltige (lat.: Lignum = Holz) Stoffe wie z.B. Holz, Stroh, Heu, aber auch Papier.

Eine Schnellpyrolyse dient der Umsetzung von kohlenstoffhaltigen Einsatzstoffen wie Biomasse in viel flüssiges Pyrolysekondensat (Pyrolyseöl) sowie wenig festen Pyrolysekoks und Pyrolysegas. Eine Schnellpyrolyse erfolgt bei der vorgenannten Biomasse als Einsatzstoff unter Sauerstoffausschluss innerhalb weniger Sekunden vorzugsweise in etwa einer Sekunde bei ca. 400 bis 600°C, vorzugsweise um 500°C, wobei sich typischerweise ein Anteil an Bioöl von 40 bis 80 Gew.% und an Biokoks von nur 10 bis 30 Gew.% einstellt.

Die Schnellpyrolyse - auch als Blitzpyrolyse bekannt - ist somit eine spezielle Pyrolysemethode, bei der besonders viel flüssiges Pyrolysekondensat und wenig Gas und Koks entstehen. Insbesondere lassen sich Holz und Stroh (Lignocellulose) zu über 50 % bis zu 80 % zu Bioöl verflüssigen.

Üblicherweise wird das Pyrolysegas von den anderen beiden Pyrolyseprodukten, dem Pyrolysekoks und dem Pyrolysekondensat abgetrennt und wird damit z.B. als Heizbrennstoff für den vorgenannten Pyrolysevorgang nutzbar.

Das verbleibende flüssige Pyrolysekondensat und der Pyrolysekoks werden als Mischung dieser Komponenten zu einem Ölschlamm (Bioölschlamm, Slurry) von der Schnellpyrolyse einer Flugstromvergasung zugeführt, wo die genannten Produkte in einem unterstöchiometrischen Sauerstoffstrom zerstäubt und vergast werden.

Durch Flugstrom-Vergasung kann man bei hohen Temperaturen und Drucken ein praktisch teer- und methanfreies Rohsynthesegas bei hohem Umsatz herstellen, was vor allem bei einer anschließenden Synthese vorteilhaft ist. In Festbett- oder Wirbelschichtreaktoren kann das vor allem wegen der niedrigeren Betriebstemperatur nicht erreicht werden. Für eine Flugstromvergasung ist jedoch die Vorbereitung der Brennstoffe aufwendig. Biomasse, insbesondere Lignocellulose wie Holz und Stroh, lässt sich am einfachsten durch Schnellpyrolyse in eine pumpbare Flüssigkeit oder einen Slurry umwandeln, der mit einfachen Pumpen in einen Flugstrom-Druckvergaser gepumpt und mit Sauerstoff zerstäubt und vergast werden kann.

Das genannte Verfahren weist jedoch einige entscheidende Einschränkungen auf, welche die Anwendung erschweren, erheblich einschränken oder besondere Vorkehrungen erforderlich machen.

Vor allem ist ein Slurry häufig in seiner Zusammensetzung nicht stabil und lagerfähig, d.h. es ist nach einer mehr oder weniger langen Lager- oder Transportzeit mit einer Entmischung, Viskositätserhöhung oder anderen Eigenschaftsänderungen zu rechnen. Einerseits kann sich der Pyrolysekoksanteil im Slurry absetzen, andererseits können sich Pyrolysekondensatanteile entmischen, wobei sich eine wässrige und eine organische Phase bilden. Die wässrige Phase kann mehr oder weniger große Mengen wasserlöslicher organischer Verbindungen enthalten, insbesondere Essigsäure, Alkohole und andere Kohlenwasserstoffe mit Sauerstoff oder weiteren Heteroatomen.

Gefährlich bei der Vergasung unter Sauerstoff in einem Flugstrom-Druckvergaser wird insbesondere ein lokal erhöhter wässriger Anteil im Slurry, d.h. eine überwiegend heizwertarme wässrige Phase (z.B. Schwelwasser) mit nur geringen Anteilen an organischen Komponenten (z.B. Alkoholen) und Pyrolysekoks. Weist die wässrige Phase nämlich aufgrund einer stattgefundenen Entmischung einen niedrigen Heizwert auf, d.h. sie enthält kaum brennbare Verbindungen in gelöster oder dispergierter Form, stellt sich im Flugstrom-Druckvergaser ein Sauerstoffüberschuss ein, der in Folge einer Vermischung mit zuvor erzeugtem Synthesegas zu einer Explosion führen kann.

Die genannten Gefahren und Einschränkungen erschweren bislang eine Flugstrom-Druckvergasung von Biomasse im großen Stil. Besonders schränken die vorgenannten Entmischungen den Transport des Zwischenprodukts, des Slurrys, über längere Distanzen, z.B. von einer dezentralen Pyrolyse möglichst direkt beim Erzeuger der Biomasse zu einem zentralen Flugstrom-Druckvergaser zur Erzeugung von Biosynthesegas, stark ein. Zudem lassen sich viele Slurrys aus saisonal anfallenden Abfällen aus der Land- und Forstwirtschaft als Zwischenprodukt nur begrenzte Zeit in einem abgeschlossenen Behälter wie einem Tank lagern.

Bei Pyrolysekondensaten, die in einem Tank teilweise auch über größere Zeiträume bevorratet werden, besteht insbesondere die Gefahr einer Phasentrennung zwischen einer heizwertarmen wässrigen und einer heizwertreichen organische Phase des Pyrolysekondensats. Die Gefahr besteht insbesondere dann, wenn der Tankinhalt nicht kontinuierlich und nicht ausreichend effizient durchmischt werden kann.

Auch können sich verflüchtigende, niedrig siedende Bestandteile die Zusammensetzung der organischen und der wässrigen Phase je nach Art der Lagerung bei ein und demselben Pyrolysekondensat im Laufe einer Lagerungszeit verändern.

EP 1520900 A1 offenbart ein Verfahren zur Vergasung von Pyrolysegasen, bei dem die Pyrolysekondensate in eine organische und eine wässrige Lösung getrennt werden und die beiden Phasen zusammen mit unterstöchiometrischem Sauerstoff in den Vergaser eingespeist werden, wobei jedoch zumindest die organische Phase kontinuierlich und ohne Unterbrechung dem Vergaser zugeführt werden.

WO 03/033624 beschreibt dagegen ein Verfahren zur Behandlung von Biomasse, bei dem die Biomasse einer Schnellpyrolyse unterworfen wird, wobei sich Bioöl und Pyrolysekoks bilden, der Pyrolysekoks in dem Biolöl zu einem Ölschlamm aufgeschwämmt wird, der Ölschlamm in einen auf einem Überdruck gehaltenen Flugstromvergaser gepresst und in dem Flugstromvergaser zu einem Rohsynthesegas umgesetzt wird.

E. Henrich: DGMK-Fachsbereichstagung "Energetische Nutzung von Biomassen" vom 22. Bis 24. April 2002, Seiten 95-102 beschreibt eine Flugstromvergasung von Pyrolyseprodukten aus schnellwachsender aschereicher Biomasse wie Stroh bei hohem Druck. Dabei wird Pyrolysekoks und Pyrolysekondensat zu einem sog. Slurry vermischt und in den Vergaser eingebracht.

Die WO 00/68338 A1 offenbart eine Rückgewinnung von Öl aus der Pyrolyse von kohlenwasserstoffhaltigen Material wie geschredderte Autoreifen, bei dem das Öl an einem Ölkondesator abgeschieden wird. Zur selektiven Abscheidung von Öl wird eine Stofftrennung von Öl- und Wasseranteilen mittels Kondensator vorgeschlagen. Beim Durchlauf sollte die Temperatur des Kondensats oberhalb des Taupunkts von Wasser liegen, sodass nur Öl abgeschieden wird. Eine Weiterleitung von Pyrolyseprodukte zu einer Flugstromvergasung und/oder eine Vermischung mit Pyrolysekoks (hier Holzkohle) werden nicht thematisiert.

Davon ausgehend liegt die **Aufgabe der Erfindung** darin, ein weiter verbessertes Verfahren zur Vorbereitung von Schnellpyrolyseprodukten aus Biomasse für eine Flugstrom-Druckvergasung vorzuschlagen, das insbesondere die Gefahr von unerwünschter Entmischung von Slurrys bei einer Lagerung vor Eintritt in den Flugstrom-Druckvergaser in erheblich kleineren Grenzen hält.

Die Aufgabe wird durch ein Verfahren mit den Merkmalen von Anspruch 1 gelöst. Die Unteransprüche geben vorteilhafte Ausgestaltungen des Verfahrens wieder.

Die Erfindung basiert auf einem Verfahren zur Herstellung und / oder Vorbereitung von Schnellpyrolyseprodukten aus Biomasse für eine Flugstrom-Druckvergasung. Es umfasst mehrere Verfahrensschritte, und zwar eine Aufheizung der Biomasse unter Sauerstoffausschluss in einem Pyrolysereaktor, wobei die Biomasse zu Pyrolysekoks, Pyrolysekondensat und Pyrolysegas reagiert, ein Kondensieren der dampfförmigen Bestandteile des Pyrolysekondensats sowie ein Ableiten der verbleibenden Pyrolysegase. Der Pyrolysekoks kann vor der Kondensation der Dämpfe getrennt gesammelt werden, aber auch zeitgleich zusammen mit der ersten Kondensatfraktion. Das Kondensieren erfolgt in mehreren Kondensationsstufen, wobei sich bei jeder Kondensationsstufe ein Bestandteil abtrennt.

Ein wesentliches Merkmal der Erfindung betrifft die Chronologie der vorgenannten Kondensationsstufen, wobei in einer ersten Kondensationsstufe oberhalb des Taupunkts von Wasser bei ca. 90°C ein Schwelteer aus den Pyrolysedämpfen, sowie in mindestens einer folgenden Kondensationsstufe vorzugsweise zwischen 0°C (Fliesstemperatur von Wasser) und dem vorgenannten Taupunkt von Wasser eine als Schwelwasser bezeichnete wässrige Lösung von sauerstoffhaltigen organischen Verbindungen kondensiert und separiert werden.

Bevorzugt umfasst das Verfahren mindestens eine weitere Kondensationsstufe nach der ersten Kondensationsstufe und vorzugsweise vor der vorgenannten letzten Kondensationsstufe, in dem bei einer einstellbaren Temperatur zwischen 0 und dem Taupunkt von Wasser bei ca. 90°C mehrere organische Pyrolyseprodukte stufenweise auskondensiert werden.

Durch stufenweise Kondensation ist eine vorteilhaft einfache wie zuverlässig kontrollierbare Gewinnung von unterschiedlichen Phasen möglich. Produkte aus einer Kondensation oberhalb des Wassertaupunktes des Pyrolyseproduktstroms werden hier in Analogie zur Kohlepyrolyse als Schwelteere (Pyrolyseteere) bezeichnet. Die anschließend zwischen 0°C und dem Taupunkt von Wasser gewonnenen Kondensate werden als Schwelwasser bezeichnet. Schwelwasser enthält eine Vielzahl flüchtiger sauerstoffhaltiger organischer Verbindungen, hauptsächlich Essigsäure, die Feuchte des Pyrolyseguts, sowie das erst bei der Pyrolyse gebildete Reaktionswasser (z.B. im Bereich um 15 Gew.% der trockenen Lignocellulose).

Durch die stoffliche Trennung von Bestandteilen des Pyrolysekondensats erhält man mindestens zwei gut lager- und transportstabile Pyrolyseprodukte mit einer vorteilhaft geringen Neigung zur weiteren Entmischung. Bevorzugt werden diese Zwischenprodukte in dezentralen Pyrolyseanlagen erzeugt und ggf. nach einer optionalen Lagerung separat an einen zentralen Flugstrom-Druckvergaser geliefert und erst kurz vor der Flugstrom-Druckvergasung vorzugsweise in einem kontinuierlichen Vermischungsprozess miteinander zu einem zu vergasenden Slurry mit der gewünschten und einstellbaren homogenen Zusammensetzung vermischt.

Die Pyrolysekokse werden trocken und pulverförmig oder feucht und zusammen mit den kondensierten Dämpfen aus dem Pyrolysereaktor ausgetragen. Werden sie mit einem Heißzyklon direkt bei Pyrolysetemperatur abgeschieden, so findet keine katalytisch partielle Zersetzung der kondensierbaren Pyrolysedämpfe durch die aschehaltigen Kokspartikel zu Koks und Gas statt. Pyrolysekokspartikel sind spröde und lassen sich daher leicht weiter zerkleinern. Aus dem lockeren trockenen Pyrolysekokspulver und den verschiedenen Pyrolysekondensaten, -Teeren oder wässrigen Lösungen lassen sich Krümel, pumpbare Pasten oder Slurries höherer Dichte herstellen, die sich kompakter und kostengünstiger lagern und vor allem transportieren lassen als die ursprüngliche Biomasse. Darüber hinaus sind pumpbare und mit Sauerstoff pneumatisch zerstäubbare Flüssigkeiten oder Slurries für Flugstrom-Vergaser, die bei sehr hohen Drucken oberhalb der späteren Synthesedrucke betrieben werden, als Einsatzstoffe technisch viel besser und einfacher handhabbar als Brennstoffpulver aus lockerem trockenen Pyrolysekokspulver oder zerkleinerter trockener Biomasse in unpyrolysierter Form.

Folglich umfasst die Erfindung eine bevorzugte Abtrennung des Pyrolysekokses und eine Einmischung von Schwelteer und / oder von organischen Bestandteilen in den Pyrolysekoks während oder nach der ersten Kondensationsstufe, d.h. nach einer Kondensierung und Separierung der Schwelteeranteile, bevorzugt aber vor einem Ausschleusen des Pyrolysekokses aus der Pyrolyseanlage.

Im Rahmen der Erfindung kann sowohl aschearme als auch aschereiche Lignocellulose mit über 2 Gew.% Asche als Biomasse eingesetzt werden, wobei sich bei aschereicher Biomasse zwei Flüssigkeiten auch bei einstufiger Kondensation gewinnen lassen. Es scheidet sich häufig ein dunkler schwerer Absitzteer (Schwelteer) im Kondensat ab, der feinen Koksstaub sammelt und in der leichten Schwelwasserphase zu Boden sinkt. Aus zerkleinertem rindefreien Holz hingegen, das typischerweise nur ≤ 1 Gew.% Asche enthält, wird durch Quenchkondensation bei Zimmertemperatur nur ein einziges homogenes, ölartiges Bio- oder Pyrolyseöl gewonnen, das mit Wasser, aber nicht mit Heizöl mischbar ist. Homogene Pyrolyseöle (Pyrolysekondensat) aus feuchten Einsatzstoffen sind allerdings häufig instabil, weil sie bei höheren Wassergehalten über 30 Gew.% zur schwer vorhersagbaren spontanen Entmischung in eine heizwertarme wässrige Lösung von CHO-Verbindungen (Schwelwasser), und eine schwerere heizwertreiche organische Schwelteer-Phase aus einer Vielzahl von CHO-Verbindungen neigen. Man kann dieses Problem mit mehrstufiger Kondensation von vornherein lösen.

Alternativ erfolgt die vorgenannte erste Kondensationsstufe des Verfahrens gemäß der Erfindung ohne oder nach einer partiellen vorangegangenen Abtrennung des Pyrolysekokses von dem Pyrolysekondensat, wobei der Schwelteer vom porösen Pyrolysekoks aufgenommen wird. Dadurch weisen die Pyrolysekokspartikel nicht mehr eine staubförmige, sondern eine feuchtkrümelige Konsistenz auf, in die idealerweise der gesamte Schwelteer eingebunden ist. Schwelteer wirkt als Bindemittel zwischen Kokspartikeln, fördert dadurch das Agglomerieren und unterdrückt eine grundsätzlich explosive Staubbildung äußerst wirksam.

In einer Schnellpyrolyse mit Wärmeträgern wie Sand, SiC oder anderen Materialien werden die spröden Pyrolysekokse nämlich so klein gemahlen, dass sie mit den Pyrolysegasen und Dämpfen komplett ausgetragen und üblicherweise sofort nach dem Reaktor in einem Heisszyklon bei Pyrolysetemperatur in rieselfähiger Form abgetrennt werden. Solche Kokse sind oft pyrophor. Gelangt abgekühlter Schnellpyrolysekoks erstmals an die Luft, kann er sich wegen der großen inneren Oberfläche von ≥ 100 m²/g bis zur Selbstentzündung erhitzen.

Langzeitstabile nicht staubende und nicht selbstentzündliche Pyrolysekondensat-Pyrolysekoks-Mischungen sind dagegen je nach Kondensatanteil krümelartig bis pastenartig. Insbesondere Krümel enthalten meist mehr Koks als zur Bildung eines pumpbaren Slurries erlaubt. Dichte und Handhabbarkeit sind insbesondere durch den Kondensatanteil auf einen gewünschten Wert einstellbar. Bevorzugt liegt die Dichte zwischen ~300 kg/m³ für trockenes Kokspulver und ~1300 kg/m³ für eine dichte Paste. Als geeignete Transportdichten für die Bahn sind Werte etwas unter 1 t/m³ besonders günstig. Das entspricht etwa den nicht vollständig mit Pyrolysekondensat voll gesogenen Kokskrümeln.

Eine Handhabung von trockenem Pyrolysekoks, d.h. ohne oder nur mit geringen Pyrolysekondensatanteilen, dagegen würde aufgrund einer ausgeprägten pyrophoren Neigung an Luft nur unter großem technischem Sicherheitsaufwand möglich sein. Durch Vermischen unter Aufsaugen von Pyrolysekondensaten in das Porensystem der Kokse kann sowohl das Stauben als auch die Selbstenzündlichkeit drastisch vermindert werden.

Auch wenn bei der Schnellpyrolyse nur ein einziges Quenchkondensat, im vorliegenden Fall das Pyrolysekondensat (Pyrolyseöl, Bioöl) gewonnen wird, so kann das Pyrolysekokspulver auch durch Aufsaugen einer Teilmenge dieses Kondensats in eine kompaktere nicht staubende Transportform (Krümel oder Paste) mit der gewünschten Konsistenz überführt werden.

Ebenso kann eine Abtrennung von nach der ersten Kondensationsstufe noch gas- und/oder dampfförmig vorliegenden Bestandteilen des Pyrolysekondensats und des Pyrolysekoks unmittelbar nach dem ersten Kondensationsstufe erfolgen. Dadurch werden diese Bestandteile den folgenden Kondensationsstufen entzogen, was die Gefahr einer Verunreinigung zusätzlich mindert.

Vorzugsweise umfassen die vorgenannten Verfahren eine getrennte, d.h. eine eigene separate Weiterleitung des ggf. schwelteerhaltigen Pyrolysekokses einerseits und der Pyrolysekondensate wie z.B. das Schwelwassers andererseits als Einzelstoffströme und ggf. über eine zwischengeschaltete Lagerung in abgeschlossenen Behältern (z.B. Transportbehälter wie Kesselwagen und Silowagen für einen bevorzugten Bahntransport oder Lagerbehälter wie Silos oder Tanks) hin zu einer Vermischung aller oder eines Teils (mindestens einer) der vorgenannten Pyrolyseprodukte zu einem kontinuierlichen homogenen Mischstrom (Slurry) miteinander oder auch mit anderen zusätzlichen Bestandteilen. Idealerweise werden dabei alle aus der Schnellpyrolyse gemäß der Erfindung gewonnenen Pyrolyseprodukte in den Mischstrom eingebracht.

Das Einmischen muss nicht für alle beteiligten Produkte (Einzelstoffströme) simultan erfolgen. Vielmehr richtet sich die Chronologie der Einmischung danach, dass die Homogenität des Stoffstroms bei der anschließenden Vergasung in einem Flugstrom-Druckvergaser stets gewährleistet ist. Vorzugsweise werden zuerst Pyrolysekokspartikel in einen niedrigviskosen Schwelwasserstrom oder umgekehrt zu einem Zwischenmischproduktstrom vermischt. Dabei können statische oder bewegliche Vermischer (z.B. Zusammenflüsse vieler Einzelkanäle bzw. Rührgeräte) die Homogenität des Stoffstroms bei der Vermischung unterstützen. Eine gute Lager- und Transportfähigkeit der einzelnen Pyrolyseprodukte ermöglicht eine besonders wirtschaftliche Vermischung von Einzelstoffströmen im größeren Maßstab in einer zentralen Mischvorrichtung und/oder findet zur Vermeidung einer Entmischung des Mischstroms unmittelbar, d.h. maximal 2 Minuten, weiterhin bevorzugt unter 30 Sekunden vor der Flugstrom-Druckvergasung statt. Eine Nasszerkleinerung und Desagglomerierung der Pyrolysekokspartikel im Stoffstrom findet bevorzugt unter aufheizender Verdünnung mit heißem Pyrolysekondensat in effizienten Mischapparaten z. B. einem Kolloidmischer unter Ausnutzung der Zerkleinerungs- und Mischwärme sowie zusätzlicher Abwärme statt.

Es liegt somit im Rahmen der Erfindung, wenn hochviskose Einzelstoffströme portionsweise in einem abgeschlossenen Behälter zwischengelagert sind und erst nach einer Zugabe von niedrigviskosem Schwelwasser (Verdünnung oder Suspendierung) aus dem Behälter wieder entfernbar sind.

Für Lignocellulose ist eine Schnellpyrolyse statt einer normalen langsamen Pyrolyse erforderlich, weil man nur damit genügend Pyrolysekondensat erhält um das gesamte Pyrolysekokspulver darin zu einem pumpfähigen Slurry zu suspendieren, insbesondere bei aschereichen Einsatzstoffen wie Stroh. Wegen der hohen Porosität der Pyrolysekokspulver braucht man etwa doppelt soviel Kondensat wie Koks um einen pumpfähigen Slurry zu erzeugen. Das entspricht einem Volumenverhältnis von Feststoffpartikeln und Flüssigkeit von etwa 1:1 wie es z. B. auch aus der Herstellung von Kohlepulver/Wasser-Slurries bekannt ist, bei der das Gewichtsverhältnis fest/flüssig wegen des nicht porösen Pulvers etwa 70/30 Gew.% beträgt. Beim Pyrolysekoks wird rund die Hälfte des Pyrolysekondensates zuerst in das Porensystem eingesaugt und erst die zweite Hälfte trägt als Schmiermittel um die Körner herum zur Pumpbarkeit bei. Durch ein breites Korngrößenspektrum, effizientes Homogenisieren, Desagglomerieren und Zerkleinern beispielsweise in einer Kolloidmühle, sowie durch Aufwärmen kann man den handhabbaren Feststoffanteil eventuell noch etwas steigern. Das wird wichtig bei aschereicheren Feststoffen wie z. B. Reisstroh (Asche ~15Gew.%), bei denen die Koksausbeute so hoch ist, dass es schwierig wird genügend Kondensat für einen pumpfähigen Slurry zu erzeugen. Dessen Viskosität wird durch Aufheizen auf bis zu 0.2 Pas reduziert, damit er mit konventionellen Mitteln pneumatisch noch gut zerstäubt werden kann. Die Abfallwärme aus den Vergasungs-, Synthese- und Aufarbeitungsprozessen wird durch Aufheizen der Slurries zur gleichzeitigen Verbesserung von Viskosität, Pumpbarkeit und Zerstäubbarkeit sowie zur Steigerung der handhabbaren Feststoffbeladungen genutzt.

Bei mit Pyrolysekoks sehr hoch beladenen, warmen Slurries wurde häufig ein thixotropes Verhalten beobachtet. Zur Ausnutzung dieses Effektes ist die Handhabungs-Zeitdauer zwischen der Herstellung der heißen Slurries und der Zerstäubung im Vergaser begrenzt. Typisch sind beispielsweise ein oder wenige Minuten, bevor sich ein frisch aus einem Kolloidmischer kommender bis 90°C heißer und frei fließender Bioöl/Koks-Slurry wieder zu einem bis zur beginnenden Pastenbildung heißen Brei verfestigt. Die Härte (severity) einer tolerierbaren thermischen Belastung beim Aufheizen der Slurries wird nicht zuletzt auch durch die thermische Stabilität insbesondere der Pyrolyseteere begrenzt.

Die Herstellung von heißen, mit Pyrolysekoksen hochbeladenen aber noch gut pump- und zerstäubbaren Einsatzslurries für den Vergaser kann wegen der erwünschten Ausnutzung der Aufheizung, der Thixotrophie, der Homogenität etc. erst kurz vor der Einspeisung in den Vergaser erfolgen. Hochbeladung und Homogenisierung können - wie bei der Zementleimherstellung - z.B. mit einem Kolloid-Mischer erreicht werden; dessen Wirkung auf starken Schwerkräften bei > 10⁴· s⁻¹ beruht. Es ist vernünftig so einen großen technischen Aufwand aus wirtschaftlichen Gründen nur einmal vorzusehen, und zwar kurz vor dem Einspeisen in den Flugstrom-Druckvergaser. Wenn vorher auf das Kolloidmischen oder ähnliche Operationen wegen des technischen und finanziellen Aufwandes verzichtet werden soll, wird es schwieriger ausreichend sedimentationsstabile Slurries für Lagerung und Transport zu erzeugen. Daher macht es Sinn, wenn für Lagerung und Transport nur einfach herstellbare Slurry-Vorstufen (u.A. Einzelstoffströme) eingesetzt werden, bei denen irgendwelche Eigenschaftsänderungen während Lagerung oder Transport, bei der Herstellung der endgültigen Slurries nochmals bei optimalen Herstellungsbedingungen berücksichtigt werden können.

Eine zentrale Slurry-Herstellung in einer Großanlage (Flugstrom-Druckvergaser) ist nicht nur aus den vorgenannten wirtschaftlichen Erwägungen zu bevorzugen. Es müssen mehr oder weniger unterschiedliche Einzelchargen (z.B. aus diversen Kessel- und Silo-Wagen) zu einem möglichst nach Schlacke- und CHO-Zusammensetzung, sowie Heizwert - lange Zeit konstant zusammengesetzten Slurry zusammengemischt werden. Die stündlichen Durchsätze der Großanlagen liegen im Bereich um 500 t/h Slurry, die maximal möglichen Transporttankinhalte nur bei etwa 80 Tonnen. Aus den vielen dezentralen Anlagen werden unterschiedliche Produkte angeliefert. Durch eine geplante Menü-Zusammenstellung der unterschiedlichen Lieferchargen der Einzelstoffströme kann dies auf technisch einfachere Weise mit Operationen wie Mischen, Mahlen, Homogenisieren, Aufwärmen etc. verbunden werden.

Des Weiteren ergeben sich eine Menge von Vorteilen durch Erwärmen der Slurries während der Herstellung: Nutzung von Abfallwärme mit Verringerung des O₂-Verbrauchs und Verbesserung des Kaltgas-Wirkungsgrades im Vergaser, geringere Pumpleistung durch Viskositätsreduktion. Ein längeres Warmhalten oder gar Erhitzen der Slurries kann aber zu unerwünschten Zersetzungsreaktionen führen und sollte vermieden werden.

Schwelteere insbesondere solche aus Holz können beim Abkühlen von etwa 90°C Kondensationstemperatur auf Zimmertemperatur zu einer festen Masse erstarren, durch Ausfrieren von Feststoffen oder Überschreiten der Löslichkeit von Komponenten. Bei Lagerung und Transport im Winter können durch Temperaturen bis unter 0°C derartige Effekte verstärkt werden. Steif gewordene oder ggf. partiell entmischte Slurries oder Kondensate (z.B. Bioöle) müssen dann in den Transportbehältern vor dem Pumpen zuerst mit großem Aufwand aufgewärmt werden. Mit dem Zusatzaufwand von geheizten Transportbehältern könnte man dies verhindern.

Eine Sedimentation stört bei sehr lockerem, leicht resuspendierbaren Bodensätzen nur wenig. Bei Slurryansätzen mit Schwelwasser wurde häufig die Bildung festerer Bodensätze nach einiger Stand- oder Transportzeit beobachtet. Durch kleinere Partikel (Mahlen) und gute Homogenität (Kolloidmischer), ein breiteres Größenspektrum und die höhere Viskosität insbesondere der Schwelteere und auch Pyrolyseöle lässt sich die Sedimentation verzögern. Mit entsprechendem Aufwand hergestellte Chargen waren auch nach über einem Jahr noch ohne Probleme suspendier- und pumpbar.

### Ausführungsbeispiele:

Die Flüssig- und Feststoffausbeuten der Schnellpyrolyse sind neben der Verfahrensweise auch abhängig vom Ausgangsmaterial und dessen Gehalt an anorganischen Substanzen. Im den folgenden Ausführungsbeispielen steht Holzpyrolyse als Synonym stellvertretend für eine Schnellpyrolyse mit hohem Anteil von flüssigen Produkten, Strohpyrolyse für eine Schnellpyrolyse mit niedrigerem Anteil von flüssigen Produkten.

### Beispiel 1:

Im Rahmen einer Holzpyrolyse wird vor dem Durchgang der Pyrolysedämpfe durch die Kondensation Pyrolysekoks in einem oder mehreren Heißzyklonen abgetrennt. Das flüssige Kondensat wird danach zweistufig gewonnen, wobei die Viskosität des Schwelteers über die Temperatur der ersten Kondensationsstufe eingestellt wird. Die Produktverhältnisse der Flüssigkeit sind dabei ca. 15 bis 40% organischer Schwelteer und 60-85 % wässriges Kondensat. Der organische Teer wird anschließend mit dem trockenen Pyrolysekoks vermischt.

Aus 1000 kg eingesetzter Biomasse erhält man so zwischen 260 kg und 530 kg organischen Pyrolysekoks von krümelformiger feuchter Konsistenz mit einem Feststoffanteil zwischen 28 und 57%, sowie zwischen 370 und 640 kg Schwelwasser. Der feuchte Pyrolysekoks hat in lockerem Zustand eine Schüttdichte von bis zu 300 kg/m3 und lässt sich für den Transport auf eine Dichte von 500 bis 900 kg/m3 komprimieren. Eine Feinmahlung erfolgt bevorzugt direkt an der Vergasungsanlage entweder in einem vorgeschalteten Verfahrensschritt oder zusammen mit der Einmischung von weiterem Pyrolysekondensat zu einem Mischstrom der gewünschten Rezeptur z.B. in einem Kolloidmischer. Eine weitere Zumischung von organischem Schwelteer oder Schwelwasser ist möglich und dient der weiteren Konfektionierung des Mischstroms für die Vergasung. Wird der organischen Schwelteer enthaltende krümelförmige Pyrolysekoks mit Schwelwasser zur Zielkonzentration vermischt, so muss der Slurry von da an bis zur Vergasung zur Vermeidung von Entmischungen in Bewegung gehalten werden.

### Beispiel 2:

Das Verfahren unterscheidet sich von dem in Beispiel 1 beschriebenen dadurch, dass die Pyrolysekokse mit einem wässrigen Kondensatanteil vermischt und die organischen Kondensatanteile ohne eine Feststoffzumischung von der Pyrolyseanlage zur zentralen Vergasungsanlage transportiert werden.

Aus 1000 kg eingesetzter Biomasse erhält man so zwischen 520 kg und 790 kg organischen Pyrolysekoks krümelformiger feuchter Konsistenz mit einem Feststoffanteil zwischen 19 und 29% Feststoffgehalt, sowie zwischen 120 und 380 kg Schwelteer. In diesem Fall kann bei der abschließenden Anmischung des Mischstroms in einer gewünschten Zielkonzentration nur wässriges Kondensat verwendet werden, da ansonsten eine Verklumpung im Mischstrom auftritt. Der Absitzteer beinhaltet vor allem hochsiedende Bestandteile mit Siedepunkten über 150°C, hat eine hohe Viskosität von mehr als 3 Pas bei 20°C und einen hohen Heizwert von mehr als 20 GJ/t. Dieser Schwelteer kann ohne Zumischung von Feststoff unter Verwendung der sog. Niedertemperaturabfallwärme (nutzbare Verfahrensabwärme) der integrierten Vergasungs- und Syntheseanlage erhitzt und in den Druckvergaser eingespeist werden. Durch die energetische Nutzung der Niedertemperaturabfallwärme wird der Gesamtwirkungsgrad des mehrstufigen Prozesses zur Biomassenutzung erhöht.

### Beispiel 3:

Im Rahmen einer Holzpyrolyse wird Holzpyrolysekoks mit Partikelgrößen von mehr als 50 µm in einem Heißzyklon von den anderen Reaktionsprodukten abgetrennt. Das Pyrolyseverfahren wird dabei so gesteuert, dass der Feinanteil (Partikelgrößen kleiner 50 µm) im Pyrolysekoks mit z.B. 35 % hoch vorliegt. Der genannte Feinanteil wird zusammen mit den Pyrolysedämpfen in der ersten Kondensationsstufe bei 90°C abgeschieden. Dabei wird organischer Schwelteer und Feinkoks zusammen als lagerstabiler feuchter Krümelkoks abgeschieden. Der trockene grobe Anteil des Pyrolysekokses (Partikelgrößen größer 50 µm) wird dagegen mit wässrigen Kondensatbestandteilen zu einer feuchtkörnigen Konsistenz vermischt. Die wässrigen Kondensatbestandteile werden dabei komplett vom Porenvolumen des Pyrolysekokses aufgenommen.

Aus 1000 kg Biomasse erhält man 170 bis 430 kg organischen Krümelkoks mit einem Feststoffgehalt zwischen 12 und 42 %, sowie 470 bis 780 kg wässrigen Krümelkoks mit einem Feststoffgehalt zwischen 13 und 21 %. Der organische und der wässrige Krümelkoks werden getrennt zu einer zentralen Vergasungsanlage transportiert. Dort wird der organische Krümelkoks in einem Kolloidmischer desagglomeriert und mit oder auch ohne Zugabe von weiterer Flüssigkeit direkt anschließend in den Vergaser eingespeist. Der wässrige Krümelkoks bedarf neben der Mischung zur Zielrezeptur noch eines zusätzlichen Mahlschrittes, da der Flugstrom-Druckvergaser mit seinen kurzen Reaktionszeiten nur für Feststoffpartikel kleiner 100 µm geeignet ist, der Pyrolysekoks aber erfahrungsgemäß Partikel bis zu einer Größe von 800 µm enthalten kann. Bei der Auswahl geeigneter Prozesse können Mahlung und Mischung miteinander kombiniert werden.

### Beispiel 4:

Im Rahmen einer Strohpyrolyse wird in einem dem ersten Kondensationsschritt vorgeschalteten Verfahrensschritt grobkörniger Pyrolysekoks (Partikelgrößen größer 50 µm) in einem Heißzyklon von den Pyrolysedämpfen abgetrennt. Danach wird im Rahmen eines ersten Kondensationsschritts bei 120°C ein feuchter teerhaltiger Pyrolysekoks mit Partikelgrößen kleiner 50 µm und einem Flüssigkeitsgehalt von 60 bis 70% abgeschieden. Das flüssige Pyrolysekondensat wird dann anschließend in mehreren weiteren Kondensationsstufen gewonnen. Der grobkörnige Pyrolysekoks wird anschließend mit dem flüssigen Pyrolysekondensat zu einer krümelig feuchten Konsistenz vermischt.

Aus 1000 kg Biomasse erhält man auf diese Weise 160 bis 350 kg organischen Krümelkoks mit einem Feststoffgehalt zwischen 35 und 73% sowie 272 kg bis 640 kg wässrigen Krümelkoks mit einem Feststoffgehalt zwischen 12 und 51%. Transport, Mahlung und Feinmischung erfolgt wie in Beispiel 3 beschrieben. Zwei konkrete Beispiele mit Messdaten sind in **Tabelle 1** aufgeführt (Weizenstrohhäcksel mit 6 % Asche, 6 % Feuchte, Grenzkorn des Zyklons nicht bestimmt).

**Tabelle 1:**

| Organischer Koks (krümelförmig) | Feststoffanteil im organischen Krümelkoks | Wässriges Kondensat | Zyklonkoks | Feststoffanteil im wässrigen Krümelkoks |
|---|---|---|---|---|
| 254 kg | 73 % | 442 kg | 61 kg | 12 % |
| 343 kg | 39 % | 272 kg | 99 kg | 27 % |

### Beispiel 5:

Vor einer Kondensation der Pyrolysedämpfe wird kein Feststoff abgeschieden, vielmehr wird der gesamte Pyrolysekoks in der ersten Kondensationsstufe gemeinsam mit dem Schwelteer abgetrennt. In den darauf folgenden Kondensationsstufen wird Schwelwasser gewonnen.

Auf diese Weise erhält man aus 1000 kg Holzspänen als Biomasse 220 bis 530 kg teerhaltigen Krümelkoks mit einem Feststoffgehalt zwischen 28 und 67%, sowie 370 bis 680 kg Schwelwasser. Aus 1000 kg Stroh als Biomasse gewinnt man 390 bis 580 kg teerhaltigen Krümelkoks mit einem Feststoffgehalt zwischen 61 und 89 %, sowie 220 bis 410 kg Schwelwasser.

Zur zentralen Vergasungsanlage werden teerhaltiger Krümelkoks und wässriges Kondensat getrennt transportiert. Vor der Vergasung ist eine Nassmahlung zur Desagglomerierung erforderlich, bei der der Holzpyrolysekoks schon eine verarbeitbare Konsistenz erreichen kann. Im Fall des Krümelkokses aus der Strohpyrolyse ist in jedem Fall eine Zudosierung von Pyrolysekondensat notwendig, um einen pumpbaren Slurry zu erhalten. Dabei kann das getrennt transportierte Schwelwasser des hier beschriebenen Prozesses zum Einsatz kommen, aber auch andere Flüssigkeiten von anderen beispielsweise dezentralen Pyrolyseeinrichtungen, die zur zentralen Vergasungsanlage angeliefert werden. Drei konkrete Beispiele mit Messdaten sind in **Tabelle 2** aufgeführt (Weizenstrohhäcksel mit 6 % Asche, 6 % Feuchte, bzw. Holzsägespäne mit 1 % Asche, 6-10 % Feuchte).

**Tabelle 2:**

| Biomasse | Organischer Koks (krümelförmig) | Feststoffanteil im organischen Krümelkoks | Wässriges Kondensat |
|---|---|---|---|
| Strohhäcksel | 458 kg | 37 % | 239 kg |
| Holzspäne | 358 kg | 36 % | 434 kg |
| Holzspäne | 460 kg | 38 % | 291 kg |

### Beispiel 6:

Krümelkoks aus einer Strohpyrolyse gemäß des Beispiels 5 wird in einer zentralen Vergasungsanlage mit Schwelwasser der Holzpyrolyse aus Beispiel 5 zu einem Mischstrom mit einem gewünschten Zielkonzentrationsverhältnis vermischt.

Beispiel 6.1: 575 kg teerhaltiger Krümelkoks der Strohpyrolyse mit einem Feststoffgehalt von 61 % werden z.B. mit 275 kg wässrigem Kondensat der Holzpyrolyse zu einem Slurry mit 37 % Feststoffanteil vermischt.

Beispiel 6.2: 395 kg Krümelkoks der Strohpyrolyse mit einem Feststoffgehalt von 89 % werden mit 675 kg wässrigem Kondensat der Holzpyrolyse vermischt zu einem Slurry mit 33 % Feststoff.

Aus den Beispielen 1 bis 5 ergeben sich weitere vielfältige Kombinationsmöglichkeiten, da in den dezentralen Pyrolyseanlagen je nach Einsatzgut und Verfahrensweise unterschiedliche Mengen und Arten von feuchtem Krümelkoks und von feststofffreiem Kondensat hergestellt werden und zum zentralen Vergaser geliefert werden können. Gerade bei der Pyrolyse von Holzprodukten fällt ein hoher Anteil von flüssigen Kondensaten an, der zur Anmischung der Slurries bei feststoffreichen Produktverhältnissen behilflich sein kann.

### Beispiel 7:

Aus den Beispielen 1 bis 5 ergeben sich folgende transportable Pyrolyseprodukte, die an die zentrale Vergasungsanlage geliefert werden können: Krümelkoks mit organischem Schwelteer als flüssigem Bestandteil, Krümelkoks mit Schwelwasser als flüssigem Bestandteil, reines Schwelwasser und reiner Schwelteer. Die Krümelkokse kann man zusätzlich unterteilen in solche, die nur Feinkoks enthalten (Partikelgröße kleiner 50 µm) und solche, die noch gemahlen werden müssen. Man steuert den Pyrolysevorgang (Pyrolysestufen) und die Verarbeitung der Pyrolyseprodukte so, dass die genannten sechs vorgenannten Transportformen standardisierte Eigenschaften haben und bei Ankunft an der zentralen Vergasungsanlage in große Sammelbehälter eingeleitet werden, in denen die Pyrolyseprodukte von vielen dezentralen Anlagen gesammelt und vermischt werden. Durch die Teilstandardisierung der Mischstromvorprodukte vereinfacht sich die Feinmischung zum gewünschten Mischstrom der Vergasung wesentlich. Der Feststoffgehalt der vorzugsweise krümelförmigen Pyrolysekokse wird gesteuert über den Abscheidegrad der Heißzyklone (Geometrie und Gasgeschwindigkeiten), das Verhältnis zwischen organischem und wässrigem Kondensat über die Verweilzeit der Pyrolysedämpfe in der heißen Zone und über die Kondensationstemperatur.

## Patentansprüche

1. Verfahren zur Herstellung und Vorbereitung von Schnellpyrolyseprodukten aus Biomasse umfassend eine krümelartige langzeitstabile nicht staubenden und nicht selbstentzündlichen Pyrolysekondensat-Pyrolysekoks-Mischung in einer Pyrolyseanlage sowie eine anschließende Vergasung in einer Flugstrom-Druckvergasung, umfassend die folgenden Verfahrensschritte:
a) Aufheizung der Biomasse unter Sauerstoffausschluss in einem Pyrolysereaktor einer Pyrolyseanlage, wobei sich für eine bis 50 Sekunden eine Temperatur zwischen 400 bis 600°C einstellt und die Biomasse zu porösem Pyrolysekoks, Pyrolysekondensat und Pyrolysegas reagiert,
b) Ableiten der Pyrolysegase sowie
c) Kondensieren von dampfförmigen Bestandteilen des Pyrolysekondensats in mehreren Kondensationsstufen,
wobei
d) in der ersten Kondensationsstufe bei Temperaturen oberhalb des Taupunkts von Wasser ein Schwelteer aus den Pyrolysedämpfen kondensiert wird,
e) in mindestens einer folgenden Kondensationsstufe eine als Schwelwasser bezeichnete wässrige Lösung von sauerstoffhaltigen organischen Verbindungen bei Temperaturen zwischen 0 und dem Taupunkt von Wasser kondensiert und separiert wird **dadurch gekennzeichnet, dass**
f) eine Abtrennung von Pyrolysekoks von den dampfförmigen Bestandteilen des Pyrolysekondensats vor der ersten Kondensationsstufe erfolgt,
g) eine Einmischung von Schwelteer und/oder organischen Bestandteilen in den Pyrolysekoks unter Bildung der krümelartigen langzeitstabilen nicht staubenden und nicht selbstenzündlichen Pyrolysekondensat-Pyrolysekoks-Mischung vor einem Ausschleusen des Pyrolysekokses aus der Pyrolyseanlage erfolgt,
h) eine getrennte Weiterleitung der krümelartigen langzeitstabilen nicht staubenden und nicht selbstenzündlichen Pyrolysekondensat-Pyrolysekoks-Mischung einerseits und von flüssigen Kondensatbestandteilen andererseits als Mischstromvorprodukte zu einer Vermischung erfolgt,
i) eine Vermischung von Mischstromvorprodukten zu einem kontinuierlichen homogenen Mischstrom erfolgt sowie
j) Vergasung des Mischstroms in einem Flugstrom-Druckvergaser erfolgt.

2. Verfahren nach Anspruch 1, mit unvollständiger Abtrennung von Pyrolysekoks von den dampfförmigen Bestandteilen des Pyrolysekondensats vor der ersten Kondensationsstufe und eine Einmischung von Schwelteer und / oder von organischen Bestandteilen in den Pyrolysekoks während der ersten Kondensationsstufe, wobei der Schwelteer und/ oder organischen Bestandteile vom noch nicht abgetrennten porösen Pyrolysekoks aufgenommen werden.

3. Verfahren nach Anspruch 1, mit vollständiger Abtrennung von Pyrolysekoks von den dampfförmigen Bestandteilen des Pyrolysekondensats vor der ersten Kondensationsstufe.

4. Verfahren nach Anspruch 2 oder 3, wobei die Einmischung eines vorher abgetrennten Pyrolysekokses vor einem Ausschleusen des Pyrolysekokses aus der Pyrolyseanlage erfolgt.

5. Verfahren nach einem der Ansprüche 2 bis 4, wobei die kondensathaltigen Pyrolysekokse Schwelteer oder Schwelwasser und die flüssigen Kondensatbestandteile Schwelwasser und / oder Schwelteer enthalten.

6. Verfahren nach einem der vorgenannten Ansprüche, wobei die Weiterleitung in abgeschlossenen Behältern oder Silos zur Zwischenlagerung oder zum Transport erfolgt.

7. Verfahren nach Anspruch 6, wobei die Weiterleitung ohne eine Umfüllung von einem in einen anderen Behälter oder Silo erfolgt.

8. Verfahren nach einem der vorgenannten Ansprüche, wobei der Vermischung eine Vorvermischung durch Einleitung von Schwelwasser in einen Behälter oder Silo zur Weiterleitung des Pyrolysekokses vorgeschaltet ist.

9. Verfahren nach einem der vorgenannten Ansprüche, wobei die Vermischung in einer zentralen Mischvorrichtung zeitlich unmittelbar vor der Flugstrom-Druckvergasung erfolgt.

10. Verfahren nach einem der Ansprüche 1 bis 9, wobei vor oder während der Vermischung die Mischstromvorprodukte erwärmt werden.

## Claims

1. Method for production and preparation of rapid pyrolysis products from biomass, comprising a granulate-type long-term stable pyrolysis condensate-pyrolysis coke mixture, not generating dust and not self-igniting, in a pyrolysis plant, and subsequent gasification in an entrained-phase pressure gasification method, comprising the following steps:
a) heating the biomass in the absence of oxygen in a pyrolysis reactor of a pyrolysis plant, wherein for up to 50 seconds a temperature of between 400 and 600 °C is imposed, and the biomass reacts to form porous pyrolysis coke, pyrolysis condensate, and pyrolysis gas,
b) removal of the pyrolysis gas, and
c) condensing of vaporous constituent parts of the pyrolysis condensate in several condensation stages, wherein
d) in the first condensation stage, at temperatures above the dew point of water a bituminous tar is condensed out of the pyrolysis vapours,
e) in at least one following condensation stage, an aqueous solution designated as bituminous water, consisting of organic compounds containing oxygen, is condensed and separated out at temperatures between 0 and the dew point of water,
**characterised in that**
f) a separation of pyrolysis coke from the vaporous constituents of the pyrolysis condensate takes place before the condensation stage,
g) a mixing of bituminous tar and/or organic constituents into the pyrolysis coke takes place with the formation of the granulate-type long-term stable pyrolysis condensate-pyrolysis coke mixture, not generating dust and not self-igniting, takes place before the pyrolysis coke is screened out of the pyrolysis plant,
h) a separated onward conveying of the granulate-type long-term stable pyrolysis condensate-pyrolysis coke mixture, not generating dust and not self-igniting, on the one hand, and of fluid condensate constituents on the other, takes place, as mixed-flow raw products, to a mixing Method,
i) a mixing of mixed-flow raw products takes place to form a continuous homogeneous mixed flow, and
j) gasification of the mixed flow in an entrained-phase pressure gasification system.

2. Method according to claim 1, with incomplete separation of pyrolysis coke from the vaporous constituents of the pyrolysis condensate before the first condensation stage, and a mixing of bituminous tar and/or of organic constituents into the pyrolysis coke during the first condensation stage, wherein the bituminous tar and/or organic constituents of not yet separated porous pyrolysis coke are absorbed.

3. Method according to claim 1, with complete separation of pyrolysis coke from the vaporous constituents of the pyrolysis condensate before the first condensation stage.

4. Method according to claim 2 or 3, wherein the mixing in of a previously separated pyrolysis coke takes place before screening of the pyrolysis coke out of the pyrolysis plant.

5. Method according to any one of claims 2 to 4, wherein the pyrolysis coke containing condensate contains bituminous tar or bituminous water, and the fluid condensate components contain bituminous water and/or bituminous tar.

6. Method according to any one of the preceding claims, wherein the onward conveying takes place in closed containers or silos to intermediate store or to transport.

7. Method according to claim 6, wherein the onward conveying takes place without a transfer filling from one container or silo into another.

8. Method according to any one of the preceding claims, wherein a preliminary mixing takes place before the mixing stage, by the introduction of bituminous water into a container or silo for the onward conveyance of the pyrolysis coke.

9. Method according to any one of the preceding claims, wherein the mixing takes place in a central mixing device, immediately preceding the entrained-phase pressure gasification Method.

10. Method according to any one of claims 1 to 9, wherein the mixing flow raw products are heated before or during the mixing.

## Revendications

1. Procédé de fabrication et de préparation de produits de pyrolyse rapide à partir d'une biomasse comprenant un mélange de condensas de pyrolyse et de coke de pyrolyse, en forme de grumeaux, stables à long terme, ne dégageant pas de poussière et sans combustion spontanée dans une installation de pyrolyse et gazéification consécutive dans un lit entraîné de gazéification sous pression comprenant les étapes de procédé suivantes :
a) chauffage de la biomasse avec apport d'oxygène dans un réacteur de pyrolyse, une installation de pyrolyse dans laquelle s'établit une température comprise entre 400 et 600°C entre 1 et 50 secondes et la biomasse réagit pour donner du coke poreux de pyrolyse, un condensat de pyrolyse et un gaz de pyrolyse,
b) évacuation des gaz de pyrolyse et,
c) condensation des composants de vapeur du condensat de pyrolyse en plusieurs étapes de condensation,
selon lequel
d) dans une première étape de condensation à des températures supérieures au point de rosée de l'eau, on condense un goudron à distillation lente des vapeurs de pyrolyse,
e) dans au moins une étape de condensation suivante, on condense et on sépare une solution aqueuse appelée eaux résiduelles de distillation lente de composés organiques contenant de l'oxygène à des températures comprises entre 0° et le point de rosée de l'eau, **caractérisé en ce que**
f) on sépare le coke de pyrolyse des composants à l'état de vapeur du condensat de pyrolyse, avant la première étape de condensation,
g) on introduit par mélange, le goudron à distillation lente et/ou des composés organiques dans le coke de pyrolyse en formant le mélange de condensat de pyrolyse, coke de pyrolyse à l'état de grumeaux, stables à long terme, ne dégageant pas de poussière et sans combustion spontanée avant d'extraire le coke de pyrolyse de l'installation de pyrolyse,
h) on transfère, de manière séparée le mélange, d'une part, de condensat de pyrolyse, coke de pyrolyse à l'état de grumeaux, stable à long terme, ne dégageant pas de poussière et sans combustion spontanée, et, d'autre part, les composants du condensat liquide comme pré-produit du flux de mélange pour former un mélange,
i) on mélange les pré-produits du flux de mélange pour obtenir un flux de mélange, homogène, continu et,
j) on gazéifie le flux de mélange dans un gazéifieur à lit entraîné sous pression.

2. Procédé selon la revendication 1,
selon lequel on sépare incomplètement le coke de pyrolyse par rapport aux composés à l'état de vapeur du condensat de pyrolyse avant la première étape de condensation et on introduit par mélange, le goudron à distillation lente et/ou les composés organiques dans le coke de pyrolyse pendant la première étape de condensation, le goudron à distillation lente et/ou les composés organiques étant pris avant de séparer le coke de pyrolyse, poreux.

3. Procédé selon la revendication 1,
selon lequel on sépare complètement le coke de pyrolyse par rapport aux composés à l'état de vapeur du condensât de pyrolyse avant la première étape de condensation.

4. Procédé selon la revendication 2 ou 3,
selon lequel on introduit par mélange, un coke de pyrolyse séparé au préalable, avant d'extraire le coke de pyrolyse de l'installation de pyrolyse.

5. Procédé selon l'une des revendications 2 à 4,
selon lequel le coke de pyrolyse contenant des condensats, le goudron à distillation lente ou les eaux résiduelles de distillation lente et les composants de condensat contiennent des eaux résiduelles de distillation lente et/ou du goudron à distillation lente.

6. Procédé selon l'une des revendications précédentes,
selon lequel le transfert se fait dans des récipients fermés ou des silos pour le stockage intermédiaire ou pour le transport.

7. Procédé selon la revendication 6,
selon lequel la transmission se fait sans transvaser dans un autre récipient ou le silo.

8. Procédé selon l'une des revendications précédentes,
selon lequel le mélange est précédé d'un prémélange pour introduire les eaux résiduelles de distillation lente dans un récipient ou dans le silo. pour transmettre le coke de pyrolyse.

9. Procédé selon l'une des revendications précédentes,
selon lequel le mélange se fait dans un dispositif central de mélange, directement avant la gazéification sous pression du flux.

10. Procédé selon l'une des revendications 1 à 9,
selon lequel avant ou pendant le mélange, on chauffe les produits de prémélange du flux de mélange.
